## Europäisches Patentamt

## European Patent Office

## Office européen des brevets

(11) Veröffentlichungsnummer : **0 153 725**
B1

# (12) EUROPÄISCHE PATENTSCHRIFT

(45) Veröffentlichungstag der Patentschrift :
19.10.88

(21) Anmeldenummer : 85102077.6

(22) Anmeldetag : 26.02.85

(51) Int. Cl.⁴ : **B 60 K 41/24**, F 16 D 67/06

(54) Steuerung für eine Bremse und eine Kupplung.

(30) Priorität : 27.02.84 US 584192

(43) Veröffentlichungstag der Anmeldung :
04.09.85 Patentblatt 85/36

(45) Bekanntmachung des Hinweises auf die Patenterteilung : 19.10.88 Patentblatt 88/42

(84) Benannte Vertragsstaaten :
DE FR GB

(56) Entgegenhaltungen :
FR-A- 2 485 998
US-A- 3 438 471
US-A- 3 440 890
US-A- 3 529 701
US-A- 3 831 722

(73) Patentinhaber : DEERE & COMPANY
1 John Deere Road
Moline Illinois 61265 (US)

(72) Erfinder : Dobberpuhl, Dale Rudolf
809 Winter Street
Horicon Wisconsin 53032 (US)
Erfinder : Behrens, Robert Nick
520 Valley Street
Horicon Wisconsin 53032 (US)

(74) Vertreter : Feldmann, Bernhard et al
DEERE & COMPANY European Office, Patent Department Steubenstrasse 36-42 Postfach 503
D-6800 Mannheim 1 (DE)

## Beschreibung

Die Erfindung betrifft eine Steuerung einer Bremse und einer Kupplung eines Bewegungsteiles, die wechselwirkend in einen ausgerückten oder eingerückten Zustand bringbar sind, wobei die Kupplung in dem eingerückten und die Bremse entgegen der Wirkung eines Kraftspeichers in ihrem ausgerückten Zustand durch einen Kraftstrom gehalten wird und sich bei Unterbrechung des Kraftstromes zu der Kupplung der Kraftspeicher entlädt, um die Bremse in ihren eingerückten Zustand zu bringen.

Aus der US-A-3,438,471 ist ein solcher aus einer Bremse und einer Kupplung bestehender Zusammenbau bekannt, der eine Magnetspule und Tellerfedern enthält, die derart zusammenwirken, daß bei Erregung der Magnetspule eine Kupplungsscheibe gegen die Wirkung der Tellerfedern angelegt und gleichzeitig eine Bremsscheibe von einer Bremsfläche abgehoben wird, während bei Nichterregung der Magnetspule die Tellerfedern die Bremsscheibe anlegen und die Kupplungsscheibe abheben. Die Steuerung zum Erregen der Magnetspule erfolgt über einen nicht offenbarten Elektroschaltkreis.

Diese Steuerung ist insofern nachteilig, als bei Fehlern im Elektroschaltkreis ein Schalter eine Stellung einnehmen kann, die dem wahren Schaltzustand der Bremse und der Kupplung nicht entspricht. Es ist auch nicht möglich, direkt auf den Schaltzustand der Bremse und der Kupplung einen Einfluß zu nehmen.

Die der Erfindung zugrunde liegende Aufgabe wird darin gesehen, die Steuerung derart auszubilden, daß unter Beibehaltung der aus der US-A-3,438,471 bekannten Schaltfolge eine direkte Kontrolle möglich ist.

Diese Aufgabe ist erfindungsgemäß durch die Lehre gemäß Patentanspruch 1 gelöst worden.

Auf diese Weise zeigt die Stellung des Betätigungsglieds stets den wahren Schaltzustand der Bremse und der Kupplung an, da es abhängig vom Schaltzustand der Bremse und der Kupplung mittels des Kraftspeichers in eine entsprechende Stellung gebracht wird. Dieser Kraftspeicher spricht zum einen automatisch bei Stromausfall infolge eines Fehlers in der Zuführung des Kraftstromes an ; zum anderen kann das Betätigungsglied unter Mithilfe des Kraftspeichers und bei zugeführtem Kraftstrom manuell auch derart verstellt werden, daß die Kupplung öffnet und die Bremse eingerückt wird.

Zudem ist die Kraft zum Abbremsen der Kupplung bereits gespeichert und kann innerhalb kürzester Zeit, also unmittelbar nach Eintreten des Ereignisses, das eine Abbremsung erforderlich macht, freigesetzt werden. Durch dieses Sicherheitsmerkmal wird zudem gewährleistet, daß immer entweder die Kupplung oder die Bremse in Eingriff ist, so daß keine unkontrollierte Bewegung des Bewegungsteiles, insbesondere einer Antriebswelle stattfinden kann. Ferner tritt bei jeder Unterbrechung des zum Erhalt des Einrückens der Kupplung erforderlichen Kraftstromes eine Abbremsung des Bewegungsteiles ein, so daß beim Ausfall der Kupplung der Bewegungsteil immer stillgesetzt wird.

Gemäß der Erfindung findet eine Vorspannung des Kraftspeichers, beispielsweise einer Feder oder eines Druckspeichers automatisch während des Verstellens des Betätigungsgliedes in eine die Bremse selbst entlastende Stellung statt. Die Bremse wird also zu einem günstigen Zeitpunkt bereits in einen Zustand gebracht, und zwar manuell durch die Bedienungsperson, aus dem heraus sie sofort in den eingerückten Zustand selbsttätig gebracht werden kann. Dies wird dadurch erreicht, daß das Betätigungsglied sowohl mit dem Schaltglied zum Bedienen der Kupplung bzw. der Bremse als auch mit dem Kraftspeicher verbunden ist, so daß mit einer einzigen Bewegung zwei Funktionen durchgeführt werden können. Der Kraftspeicher muß lediglich derart angebracht werden, daß er dem Widerstand, während er gespannt wird, standhalten kann. Er könnte demnach einenends an dem Betätigungsglied und anderenends an einem Rahmen oder Gestell befestigt sein. Der Kraftspeicher könnte sowohl als Zug- oder Druckfeder, wie auch als Druckmittelspeicher ausgebildet sein.

Um das Betätigungsglied unter der Vorspannung des Kraftspeichers in einer Bereitschaftslage halten zu können ist ein Elektromagnet vorgesehen, der das Schaltglied ohne große Schaltbewegungen freigeben kann, um die Bremse einzurücken. Dadurch, daß sich um den Elektromagnet nur dann ein Magnetfeld zum Halten des Betätigungsgliedes aufbaut wenn die Elektrokupplung mit Strom gespeist wird, ist gewährleistet, daß sobald die Stromzufuhr zu der Elektromagnetkupplung unterbrochen wird, die Bremse automatisch einrückt. In analoger Weise könnte die gleiche Wirkung auch unter Benutzung eines Hydraulik- oder Pneumatiksystems, das einen Unterdruck zum Halten des Betätigungsgliedes und einen Druck zum Einrücken der Kupplung erzeugt, erzielt werden. Sobald der Unterdruck aufgehoben wird, kann die Bremse unter der Wirkung des Kraftspeichers einrücken.

Um eine sichere Funktion des Steuermechanismus auf einfache Weise zu ermöglichen, sind der Schalter und der Notschalter vorgesehen, wobei mittels des Notschalters die Kupplung unverzüglich außer Eingriff gebracht wird, wenn die Bedienungsperson aus einer Gefahrensituation heraus das Fahrzeug abrupt anhalten muß und vermeiden will, daß die Welle, etwa eine Zapfwelle, weiter angetrieben wird.

Insbesondere die Verwendung dieses erfindungsgemäßen Steuermechanismus bei der Zapfwelle eines Ackerschleppers erbringt große Vorteile bezüglich der Bedienbarkeit und der Sicherheit.

In der Zeichnung ist ein nachfolgend näher beschriebenes Ausführungsbeispiel der Erfindung dargestellt. Es zeigt :

Fig. 1 eine Seitenansicht eines Steuermechanismus für eine Zapfwellenkupplung und -bremse, teilweise im vertikalen Schnitt,

Fig. 2 eine Draufsicht auf einen Teil des Steuermechanismus in einem Betriebszustand,

Fig. 3 eine Draufsicht auf einen Teil des Steuermechanismus in einem anderen Betriebszustand

Fig. 4 einen elektrischen Schaltkreis für den Steuermechanismus.

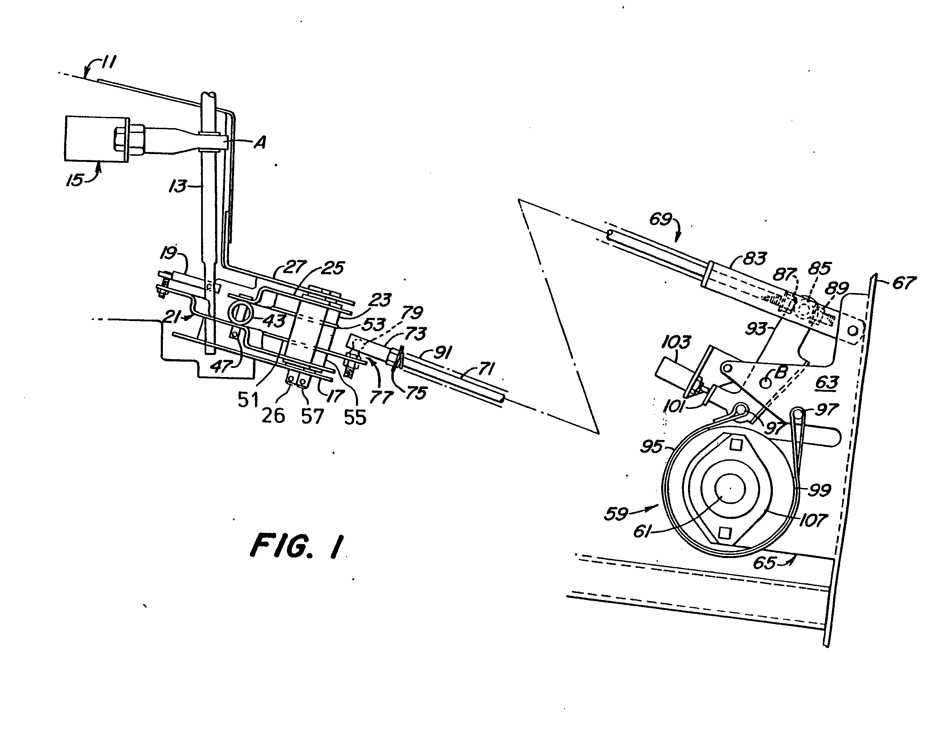

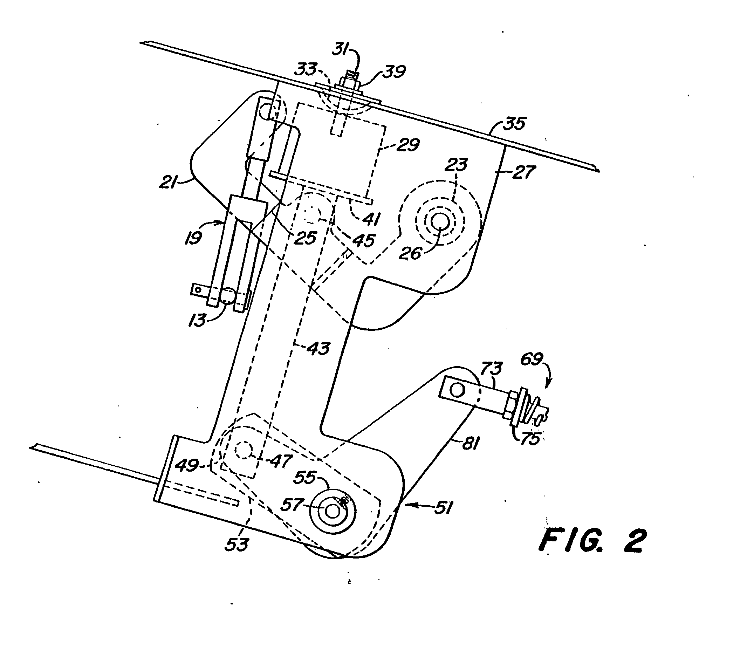

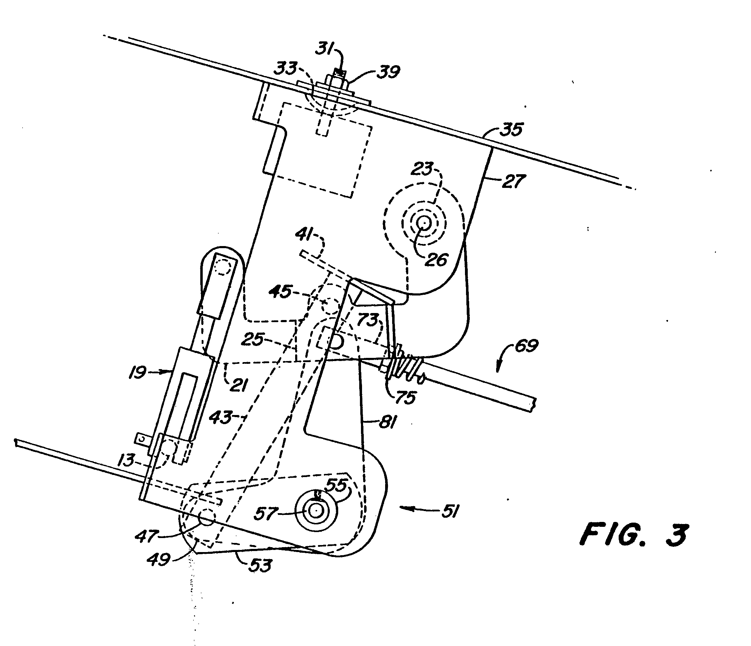

Eine aus den Figuren 1 bis 3 hervorgehende Fahrzeugbedienungskonsole 11 ist mit einem allgemein als Betätigungsglied bezeichenbaren Schalthebel 13 zum Bedienen einer Zapfwelle versehen, der sich durch einen nicht in der Zeichnung aufgenommenen Schlitz in der Fahrzeugbedienungskonsole 11 erstreckt. Ein herkömmlicher Halter 15 ist durch geeignete Befestigungsmittel an und zwar unterhalb der Fahrzeugbedienungskonsole 11 befestigt, um den Schalthebel 13 an der mit A gekennzeichneten Stelle auf bekannte Weise schwenkbar zu halten. Der Schalthebel 13 erstreckt sich ferner unterhalb der Fahrzeugbedienungskonsole 11 und wird in einem nicht gezeichneten Schlitz in einer unteren Rahmenplatte 17 gehalten bzw. geführt. Die Schlitze in der Fahrzeugbedienungskonsole 11 und in der unteren Rahmenplatte 17 dienen dazu, die Bewegung des Schalthebels 13 auf eine im wesentlichen Z-förmige Bewegungsbahn zu begrenzen. Ein einstellbares Bewegungsglied 19 ist einenends mit dem Schalthebel 13 und anderenends mit einem ersten Hebelarm 21 schwenkbar verbunden, wobei die Verbindung mit dem Schalthebel 13 über einen Haltestift und die Verbindung mit dem Hebelarm 21 über einen Kugelbolzen erfolgt. Der Hebelarm 21 wiederum ist starr mit einem Schwenkzylinder 23 verbunden, der selbst drehbar auf einer Welle 26 sitzt, wobei sich die Welle 26 zwischen der Rahmenplatte 17 und einer weiteren Rahmenplatte 27 erstreckt und von diesen gehalten wird. Ein zweiter Hebel 25 ist ebenfalls starr mit dem Schwenkzylinder 26 verbunden. Die Rahmenplatten 17 und 27 können auf beliebige Weise an einem an sich nicht dargestellten Fahrzeug, etwa an einem Ackerschlepper, befestigt sein.

Eine elektrisch ansprechende magnetische Induktionsspule 29, auch als Elektromagnet bezeichnet, ist starr auf einem Ende eines Bolzens 31 angebracht, der sich durch einen in einer Fahrzeugwand 35 eingearbeiteten Sitz 33 erstreckt. Auf das andere Ende des Bolzens 31 ist eine Mutter 39 aufgeschraubt. Eine auf Magnetismus ansprechende Platte 41 ist starr auf ein Ende eines Gliedes 43 montiert, wobei das Glied 43 schwenkbar, wie bei diesem Ausführungsbeispiel über einen Stift 45, zwischen dem Hebelarm 21 und dem Hebel 25 angebracht ist. Das Glied 43 stellt ein Kontaktglied und die Platte 41 die zugehörige Kontaktplatte 41 dar. Das andere Ende des Gliedes 43 ist durch einen Stift 47 zwischen einem Arm 49 eines Winkelhebels 51 und einem Glied 53 schwenkbar gehalten. Das Glied 53 und der Winkelhebel 51 sind an einem Schwenkzylinder 55 angebracht, der um eine Welle 57 schwenkbar gehalten ist, wobei sich die Welle 57 ebenfalls zwischen den Rahmenplatten 17 und 27 erstreckt und von diesen gehalten wird. Der erste Hebelarm 21, der zweite Hebel 25, der Winkelhebel 51 und das Glied 53 stellen gemeinsam ein Parallellenkersystem bestehend aus vier Lenkern dar.

Ein Brems-Kupplungs-Zusammenbau 59, bestehend aus einer Bremse in der Form einer Bandbremse 95 und einer Elektrokupplung 107, ist auf einer einen Bewegungsteil verkörpernden Zapfwelle 61 zwischen sich gegenüberliegenden Armen 63 einer Halterung 65 angeordnet, wobei jedoch nur einer der Arme 63 in der Zeichnung zu erkennen ist. Die Halterung 65 ist starr an einer Fahrzeugwand 67 angebracht. Der Winkelhebel 51 und der Brems-Kupplungs-Zusammenbau 59 werden über ein Gestänge 69 miteinander verbunden, wobei das Gestänge 69 eine als Schaltglied wirkende Stange 71 enthält, die über ein Gewinde mit einem einen Anschlag 75 aufweisenden Gelenk 73 in Verbindung steht. Ein Schwenklager 77 ist in einen Sitz 79 des Gelenks 73 eingesetzt und ebenfalls starr mit einem Arm 81 des Winkelhebels 51 über zwei Muttern verbunden. Ein Teil der Stange 71 ist gleitend in einem Führungsglied 83 aufgenommen, das an seinem einen Ende an einem der Arme 63 schwenkbar angreift. Die Stange 71 erstreckt sich mit einem Ende gleitend durch einen Querbolzen 85 hindurch und bis über diesen hinaus. Mehrere Muttern 87 und 89, die über ein Gewinde auf der Stange 71 festsitzen, nehmen den Querbolzen 85 zwischen sich auf. Zwischen dem Anschlag 75 und dem Führungsglied 83 ist unter Vorspannung und die Stange 71 umgreifend eine Druckfeder 91 eingesetzt. Die Druckfeder 91 steht hier nur beispielhaft für einen Kraftspeicher überhaupt. An dem Arm 63 ist ferner schwenkbar ein Übertragungsglied in der Form eines Hebels 93 an der Lagerstelle B gelagert, an dessen einem Ende mittels eines Stiftes 97 die Bandbremse 95 gehalten wird. Das andere Ende der Bandbremse 95 wird ebenfalls von einem Stift 97 gehalten, der jedoch an dem Arm 63 angebracht ist, so daß sich die Bandbremse 95 um eine Bremsfläche 99 erstrecken kann. Eine im wesentlichen geradlinige Bewegung der Stange 71 sorgt dafür, daß der Hebel 93 verschwenkt wird, was zu einem Anziehen oder einem Lösen der Bandbremse 95 um die Bremsfläche 99 führt, um einen eingerückten oder einen ausgerückten Zustand der Bandbremse hervorzurufen. Der Hebel 93 ist mit einer Anschlagfläche 101 versehen, die gegen elektrische Schalter 103 und 105 drückt, wenn sich die Bandbremse 95 in einem ausgerückten Zustand befindet, wobei der Schalter 105 in der Zeichnung durch den Schalter 103 verdeckt und daher nicht sichtbar ist.

Wenn mit Bezug auf Figur 1 der Schalthebel 13 manuell nach links bewegt wird, ruft das Bewegungsglied 19 eine Schwenkbewegung des Hebelarms 21 und des Hebels 25 hervor, wodurch ebenfalls das Glied 53 verschwenkt wird. Die Verstellung des Gliedes 53 bedingt wiederum, daß sich die Platte 41 von der Induktionsspule 29 wegbewegt. Die Verstellung der Platte 41 führt ferner dazu, daß der Winkelhebel 51 und das Glied 53, das Gelenk 73 und die Stange 71 nach links verschwenken, wodurch der Hebel 93 derart verschwenkt wird, daß ein Anziehen der Bandbremse 95 eintritt, um einen Bremszustand einzunehmen. Hierdurch werden auch die Schalter 103 und 105 in einen Ausschaltzustand gebracht und ein Stromfluß zu der Elektrokupplung 107 durch einen elektrischen Kreis oder Schaltkreis 111, der weiter unten noch beschrieben wird, wird unterbrochen. Die Spannung der Druckfeder 91 hält den bremsbeaufschlagten Zustand aufrecht. Wenn der Schalthebel 13 in seine rechte Stellung zurückgeführt wird, wird der Hebel 93 wieder zurück und in Berührung mit den Schaltern 103 und 105 geschwenkt, so daß diese Schalter 103 und 105 wieder ihren eingeschalteten und Strom hindurchlassenden Zustand einnehmen. Strom kann dann wieder durch den elektrischen Schaltkreis 111 zu der Elektrokupplung 107 fließen, so daß diese einrücken kann. Die Bandbremse 95 wird dagegen in eine entlastete, lose Stellung gebracht. Die auf die Platte 41 wirkende Magnetkraft, die von der Induktionsspule 29 aufgebaut wird, ist in dieser Stellung des Schalthebels 13 ausreichend um gegen die Kraft der Druckfeder 91 ankommen zu können, so daß die Zapfwelle 61 in ihrem angetriebenen Zustand verharrt.

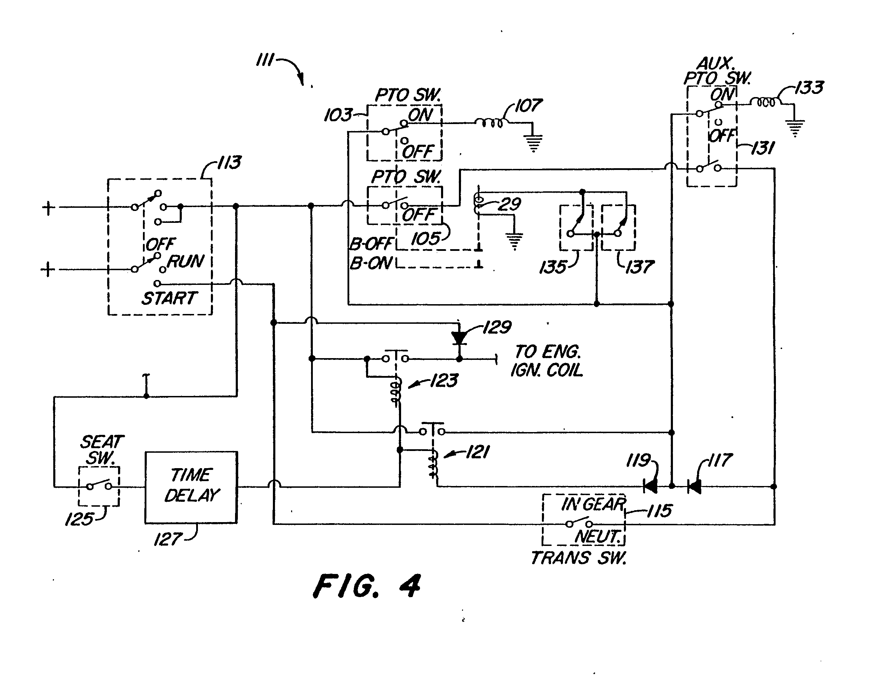

Des weiteren wird Bezug auf Figur 4 genommen, aus der der Aufbau des elektrischen Schaltkreises 111 hervorgeht. In dem elektrischen Schaltkreis 111 ist ein Doppelschalter 113 mit jeweils einer Aus-, einer Ein- und einer Startstellung vorgesehen. Wenn der Doppelschalter 113 in seine Startstellung gebracht wird, dann wird Strom einem Getriebeschalter 115 zugeführt. Damit Strom durch den Getriebeschalter 115 hindurchfließen kann, ist es erforderlich, daß das nicht gezeigte Fahrzeuggetriebe in eine Neutralstellung gebracht wird. Von dem Getriebeschalter 115 aus wird der Strom durch zwei Dioden 117 und 119, einem Spulenschalter 121 und einem Spulenschalter 123 zugeführt, wodurch beide Spulenschalter 121, 123 geschlossen werden. Den beiden Spulenschaltern 121 und 123 wird außerdem Strom durch einen Sitzschalter 125 und einen Zeitverzögerer 127 zugeleitet. Die Aufgabe des Zeitverzögerers 127 ist es, die Stromzufuhr zu den Spulenschaltern 121, 123 nicht schon beim kurzzeitigen Öffnen des Sitzschalters 125 zu unterbrechen. Der Sitzschalter 125 könnte etwa beim schnellen Fahren auf unebenem Gelände geöffnet werden. Ferner erfolgt eine Stromzufuhr durch eine Diode 129 zu einem nicht näher dargestellten Fahrzeugzündsystem, mit dem eine Antriebsmaschine des Fahrzeuges gestartet werden kann. Während der Startphase werden die Schalter 103 und 105 durch den Schalthebel 13 in eine Ausstellung gebracht.

Wenn der Doppelschalter 113 in seine Ein-Stellung gebracht wird, dann erfolgt ein Stromfluß über den Spulenschalter 123 zu dem Fahrzeugzündsystem und durch den Spulenschalter 121 zu einem Zusatzzapfwellenantriebsschalter 131, der eine Elektrokupplung 133 steuert. Die Verwendung des Zusatzzapfwellenantriebsschalters 131 und der Elektrokupplung 133 ermöglichen es, den elektrischen Schaltkreis 111 auch an Fahrzeugen bzw. Ackerschleppern zu verwenden, die einen herkömmlichen Zusatzzapfwellenantrieb als Zusatzausrüstung enthalten. Strom wird ferner zwei Not- oder Bremsschaltern 135 und 137 zugeführt, die parallel zu der Induktionsspule 29 geschaltet sind und sich normalerweise in einem geschlossenen Zustand befinden. Die Bremsschalter 135 und 137 sind ganz nahe an den nicht gezeichneten Fahrzeugbremspedalen angeordnet und zwar derart, daß der jeweils zugeordnete Bremsschalter 135 oder 137 nur dann offen ist, wenn das zugehörige Fahrzeugbremspedal ganz niedergedrückt ist. Dies führt zu einer Unterbrechung des Stromflußes zu der Induktionsspule 29 nur dann, wenn beide Bremspedale vollkommen niedergetreten sind.

Es ist zu erkennen, daß falls die Bandbremse 95 sich in ihrer betätigten Stellung (B-on) befindet, der Zapfwellenschalter 103 eine Aus-Stellung (off) einnimmt, um einen Stromfluß zu der Elektrokupplung 107 zu unterbrechen, so daß diese nicht einrücken kann, und daß sich der Zapfwellenschalter 105 ebenfalls in einer Ausstellung (off) befindet. Weiterhin ist, falls die Bandbremse 95 eine nicht betätigte Stellung einnimmt (B-off), der Schalter 103 in seiner Ein-Stellung (on), um somit einen Stromfluß zu der Elektrokupplung 107 zuzulassen, so daß diese einrückt und der Schalter 105 nimmt einen geöffneten Zustand ein. Sollte eine Gefahrensituation entstehen, dann können allein durch das vollkommene Niedertreten der Fahrzeugbremspedale beide Bremsschalter 135 und 137 geöffnet werden, so daß der Stromfluß zu der Induktionsspule 29 unterbrochen wird. Dies führt dann zu einer Beaufschlagung der Bandbremse 95 durch die Druckfeder 91 und durch das Schließen des Schalters 103 zu einem Ausrücken der Elektrokupplung 107.

## Patentansprüche

1. Steuerung einer Bremse (95) und einer Kupplung (107) eines Bewegungsteiles (61), die wechselwirkend in einen ausgerückten oder eingerückten Zustand bringbar sind, wobei die Kupplung (107) in dem eingerückten und die Bremse (95) entgegen der Wirkung eines Kraftspeichers (91) in ihrem ausgerückten Zustand durch einen Kraftstrom gehalten wird und sich bei Unterbrechung des Kraftstromes zu der Kupplung (107) der Kraftspeicher (91) entlädt, um die Bremse (95) in ihren eingerückten Zustand zu bringen, gekennzeichnet durch ein Betätigungsglied (13), das in einer Stellung die Bremse (95) in ihren eingerückten und die Kupplung (107) in ihren ausgerückten Zustand versetzt und den Kraftspeicher (91) auf dem Weg von der einen in die andere Stellung vorspannt und durch ein zwischen der Bremse (95) und dem Betätigungsglied (13) angeordnetes und auf die Bremse (95) wirkendes Übertragungsglied (93), wobei zwischen dem Betätigungsglied (13) und dem Übertragungsglied (93) ein direkt wirkendes Schaltglied (71) und zwischen dem Betätigungsglied (13) und einem ortsfesten Punkt der spannbare Kraftspeicher (91) wirksam ist.

2. Steuerung nach Anspruch 1, wobei die Kupplung (107) eine über einen elektrischen Kreis (111) gesteuerte Elektrokupplung (107) ist, dadurch gekennzeichnet, daß in dem elektrischen Kreis (111) ein Elektromagnet (29) angeordnet ist, an den das Betätigungsglied (13) zur Anlage bringbar ist, und der abhängig von dem Zustand der Elektrokupplung (107) auf das Betätigungsglied (13) wirkt.

3. Steuerung nach Anspruch 2, dadurch gekennzeichnet, daß das Betätigungsglied (13) an dem Elektromagnet (29) anliegt und von diesem gehalten wird, wenn es sich in seiner zweiten Stellung befindet.

4. Steuerung nach einem, oder mehreren der vorherigen Ansprüche, mit einem zu der Elektrokupplung (107) führenden Stromzuführkreis, dadurch gekennzeichnet, daß in dem Strömzuführkreis mindestens ein von dem übertragungsglied (93) betätigbarer Schalter (103, 105) vorgesehen ist, der eine Stromzufuhr zu der Elektrokupplung (107) unterbricht, sobald das Übertragungsglied (93) in seine die Bremse (95) einrückende Stellung gebracht ist.

5. Steuerung nach Anspruch 4, dadurch gekennzeichnet, daß der Schalter (103, 105) von dem Übertragungsglied (93) beaufschlagbar ist.

6. Steuerung nach Anspruch 4, dadurch gekennzeichnet, daß in dem Stromzuführkreis mindestens ein Notschalter (135, 137) vorgesehen ist, der in Abhängigkeit von der Stellung eines Bedienungshebels eines Fahrzeuges, insbesondere eines Radbremspedals, geöffnet oder geschlossen werden kann.

7. Steuerung nach einem oder mehreren der vorherigen Ansprüche, dadurch gekennzeichnet, daß zwischen dem Betätigungsglied (13) und dem Schaltglied (71) ein aus zwei schwenkbaren Lenkern (21, 25, 51, 53) bestehendes Parallellenkersystem vorgesehen ist, dessen einer Lenker (21) mit dem Betätigungsglied (13) und dessen anderer Lenker (51) mit dem Schaltglied (71) und dem Kraftspeicher (91) verbunden ist, wobei beide Lenker (21, 25, 51, 53) schwenkbar über ein Kontaktglied (43) mit einer an dem Elektromagnet (29) zur Anlage bringbaren Kontaktplatte (41) verbunden sind.

8. Verwendung einer Steuerung nach Anspruch 1 bis 7 bei einem Zapfwellenantrieb eines Ackerschleppers.

## Claims

1. Control of a brake (95) and a clutch (107) of a moving part (61), which can be brought alternately into a disengaged or an engaged state, wherein the clutch (107) is held by a power current in the engaged state and the brake (95) is held in its disengaged state [by the power current] against the action of a power store (91) and on interruption of the power current to the clutch (107) the power store (91) discharges, in order to bring the brake (95) into its engaged state, characterized by an operating member (13), which in one position sets the brake (95) into its engaged position and the clutch (107) into its disengaged position and pre-tensions the power store (91) on the way from the one into the other position and by a transmission member (93) arranged between the brake (95) and the operating member (13) and acting on the brake (95), wherein a direct acting switching member (71) acts between the operating member (13) and the transmission member (93) and the pre-tensionable power store (91) acts between the operating member (13) and a fixed point.

2. Control according to claim 1, wherein the clutch (107) is an electro-clutch (107) controlled by an electric circuit (111), characterised in that an electromagnet (29) is arranged in the electric circuit (111), on which the operating member (13) can be brought into abutment, and which acts on the operating member (13) depending on the state of the electro-clutch (107).

3. Control according to claim 2, characterized in that the operating member (13) bears on the electromagnet (29) and is held thereby, when it assumes its second position.

4. Control according to one or more of the preceding claims, with a current supply circuit leading to the electro-clutch (107), characterized in that there is provided in the current supply circuit at least one switch (103, 105) operable by the transmission member (93) which interrupts a current feed to the electro-clutch (107) as soon as the transmission member (93) is brought into its position engaging the brake (95).

5. Control according to claim 4, characterized in that the switch (103, 105) is acted upon by the transmission member (93).

6. Control according to claim 4, characterized in that at least one emergency switch (135, 137) is provided in the current supply circuit, which can be opened or closed in dependence upon the position of an operator lever of a vehicle, especially a wheel brake pedal.

7. Control according to one or more of the preceding claims, characterized in that a parallel link system consisting of two pivotal links (21, 25, 51, 53) is provided between the operating member (13) and the switch member (71), of which one link (21) is connected to the operating member (13) and the other link (51) to the switching member (71) and the power store (91), both links (21, 25, 51, 53) being connected pivotally through a contact member (43) to a contact plate (41) which can be brought into abutment on the electromagnet (29).

8. Use of a control according to claim 1 to 7 in a PTO drive on a tractor.

## Revendications

1. Système de commande d'un frein (95) et d'un embrayage (107) d'une pièce mobile (61), que l'on peut faire passer alternativement dans un état de désengagement ou d'engagement, l'embrayage (107) étant maintenu dans l'état engagé et le frein (95) contre l'action d'un accumulateur d'énergie (91) dans son état désengagé par un courant d'activation et l'accumulateur d'énergie (91) se déchargeant lors de l'interruption de l'alimentation en courant d'activation de l'embrayage (107), pour amener le frein (95) dans son état désengagé, caractérisé par un organe d'actionnement (13) qui, dans une position fait passer le frein (95) dans son état engagé et l'embrayage (107) dans son état désengagé et précontraint l'accumulateur d'énergie (91) au cours du passage d'une position à l'autre, et par un organe de transmission (93) placé entre le frein (95) et l'organe d'actionnement (13) et agissant sur le frein (95), un organe de manœuvre (71) à action directe agissant entre l'organe d'actionnement (13) et l'organe de transmission (93), et l'accumulateur d'énergie (91) pouvant être précontraint agissant entre l'organe d'actionnement (13) et un point fixe.

2. Système de commande suivant la revendication 1, l'embrayage (107) étant un embrayage électromagnétique (107) commandé par l'intermédiaire d'un circuit électrique (111), caractérisé en ce qu'il est placé dans le circuit électrique (111) un électro-aimant (29) au contact duquel peut être amené l'organe d'actionnement (13) et qui agit sur l'organe d'actionnement (13) selon l'état de l'embrayage électromagnétique (107).

3. Système de commande suivant la revendication 2, caractérisé en ce que l'organe d'actionnement (13) est en contact avec l'électro-aimant (29) et est retenu par celui-ci, lorsqu'il se trouve dans sa seconde position.

4. Système de commande suivant une ou plusieurs des revendications précédentes, comportant un circuit d'alimentation électrique aboutissant à l'embrayage électromagnétique (107), caractérisé en ce qu'on prévoit dans le circuit d'alimentation électrique au moins un interrupteur (103, 105) pouvant être actionné par l'organe de transmission (93), qui interrompt l'alimentation électrique de l'embrayage électromagnétique (107) dès que l'organe de transmission (93) passe dans sa position d'engagement du frein (95).

5. Système de commande suivant la revendication 4, caractérisé en ce que l'interrupteur (103, 105) peut subir l'action de l'organe de transmission (93).

6. Système de commande suivant la revendication 4, caractérisé en ce qu'on prévoit dans le circuit d'alimentation électrique au moins un interrupteur de secours (135, 137) qui peut être ouvert ou fermé selon la position d'un levier de manœuvre d'un véhicule, en particulier d'une pédale de frein de roue.

7. Système de commande suivant une ou plusieurs des revendications précédentes, caractérisé en ce qu'il est prévu entre l'organe d'actionnement (13) et l'organe de manœuvre (71) un système articulé à bras parallèles comprenant deux bras pivotants (21, 25, 51, 53), dont l'un des bras (21) est relié à l'organe d'actionnement (13) et l'autre bras (51) à l'organe de manœuvre (71) et à l'accumulateur d'énergie (91), les deux bras (21, 25, 51, 53) étant reliés de façon à pouvoir pivoter, par l'intermédiaire d'un organe de contact (43), à une plaque de contact (41) pouvant être amenée au contact de l'électro-aimant (29).

8. Utilisation d'un système de commande suivant les revendications 1 à 7 pour un mécanisme d'entraînement d'arbre de prise de force de tracteur agricole.

FIG. 1

FIG. 2

0 153 725

FIG. 3

0 153 725

**FIG. 4**